## Europäisches Patentamt

## European Patent Office

## Office européen des brevets

(11) Publication number: **0 291 814 B1**

# EUROPEAN PATENT SPECIFICATION

(45) Date of publication of patent specification: **04.03.92**

(51) Int. Cl.⁵: **B32B 31/16**, B32B 3/28

(21) Application number: **88107434.8**

(22) Date of filing: **09.05.88**

(54) **Structural panels with a corrugated core structure and a method for making the same.**

(30) Priority: **18.05.87 US 50802**

(43) Date of publication of application:
**23.11.88 Bulletin 88/47**

(45) Publication of the grant of the patent:
**04.03.92 Bulletin 92/10**

(84) Designated Contracting States:
**DE FR GB IT NL**

(56) References cited:
**US-A- 2 983 640**

(73) Proprietor: **GENERAL ELECTRIC COMPANY**
**1 River Road**
**Schenectady New York 12305(US)**

(72) Inventor: **Nied, Herman Frederick**
**18 Woods Way**
**Clifton Park New York 12065(US)**

(74) Representative: **Catherine, Alain**
**General Electric France Service de Propriété**
**Industrielle 18 Rue Horace Vernet**
**F-92136 Issy-Les-Moulineaux Cedex(FR)**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid (Art. 99(1) European patent convention).

Rank Xerox (UK) Business Services

## Description

### Background of the Invention

The present invention relates to expanded light-weight structural panels fabricated from thermoplastic sheet stock.

In many of the structural applications currently being sought for glass reinforced and unreinforced thermoplastic materials, it is highly desirable to increase the bending stiffness of the plastic panels without substantially increasing the weight of the structure. One way of satisfying this criteria is to increase the cross sectional moment of inertia by moving mass away from the center of mass of the panel and thereby increase the bending stiffness of the panel. To increase the cross sectional moment of inertia without increasing the weight, requires that the core density of the structural panel decrease. This can be accomplished by fabricating a honeycomb structure.

A plastic honeycomb panel and apparatus for producing the same are described in United States Patents 4,315,050, 4,164,389 and 4,113,909. The material of the honeycomb panel forms a monolithic structure which has a series of large periodic holes on its surface. It is possible to bond the plastic and metallic skins to the surface of the panel to form a stiff structure which has a smooth surface. In the process for making the honeycomb structure, monolithic plastic sheet is heated between two platens that have periodic arrays of holes on their surface. After heating the plastic to attain a sufficiently high temperature of the plastic to stick to the platens, the plastic is expanded into a honeycomb shape by moving the two platens apart. During the separation process, the plastic adheres to the metal plates everywhere except where the holes are located. In this manner, a complex honeycomb structure is formed once the plastic is cooled. Forming the honeycomb structure requires special molds or platens.

It is an object of the present invention to provide a simple method of fabricating expanded structural panels which are stiff in bending and also lightweight.

It is a further object of the present invention to provide a method of fabricating lightweight structural panels with glass reinforced outer skins.

### Summary of the Invention

In one aspect of the present invention a method of fabricating an expanded structural panel is provided comprising the steps of coating one side of plastic sheets with spaced apart stripes of material to which hot thermoplastic adheres poorly. Two sheets having their striped faces oriented towards one another, are positioned above and beneath a third thermoplastic sheet. The centerline of the spaces between the stripes on one sheet are positioned opposite the centerline of the stripes on the other sheet, with the stripes being wider than the opposing spaces. The layers are pressed together and the third plastic sheet heated so that it adheres to the first and second sheet where the coating is not present and so that it allows plastic deformation of the third sheet. The first and second sheets are then separated causing the portions of the third sheet with stripes above and beneath to separate from the first and second sheet and form a corrugated core.

### Brief Description of the Drawing

While the specification concludes with claims particularly pointing out and distinctly claiming the present invention, objects and advantages of the invention can be more readily ascertained from the following description of preferred embodiments when used in conjunction with the accompanying drawing in which:

Figure 1 is a partial isometric view of a composite sheet having stripes of material painted on one surface to which hot thermoplastic adheres poorly;

Figure 2 is a partial side view of an unexpanded structural panel in accordance with the present invention;

Figure 3 is a partial side view of an expanded structural panel in accordance with the present invention; and

Figure 4 is a partial isometric view of the expanded structural panel of Figure 3.

### Detailed Description of the Invention

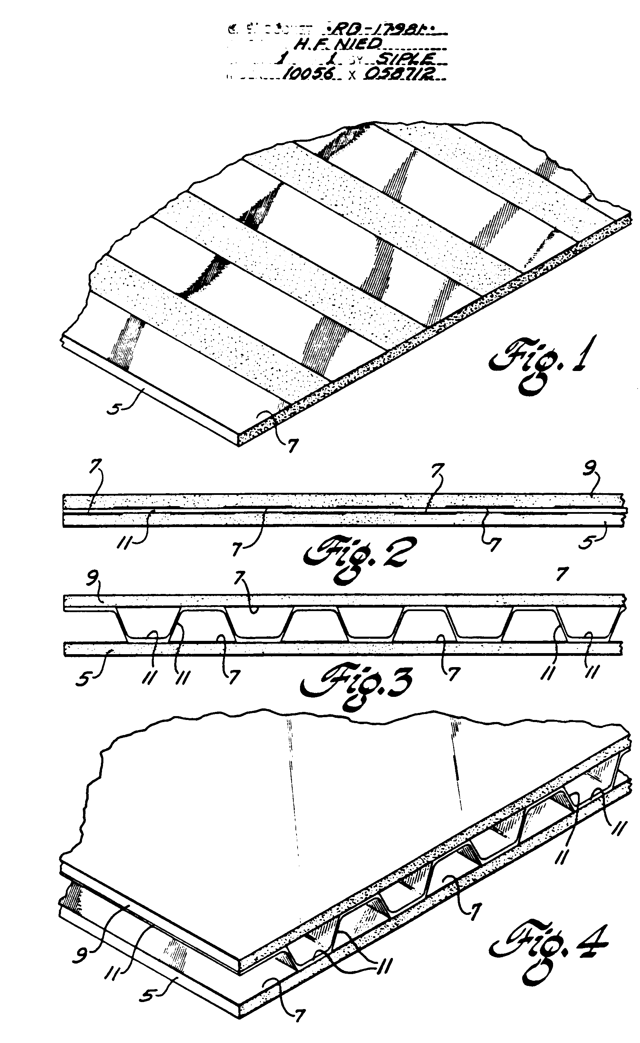

Referring now to the drawings wherein like reference numerals refer to like elements throughout and particularly Figure 1 thereof, a sheet of material 5, preferably a glass reinforced plastic composite, has a plurality of stripes of material 7, to which hot thermoplastic adheres poorly, applied thereto. The stripes do not have to be parallel to one another or of equal sizes as shown in Figure 1. The stripes of material 7 can comprise thin foils, oils, glossy paints, granular material, painted or silk-screened onto the surface. High temperature resistant aluminum paint, for example, sprayed on the surface in stripes has performed well.

Two sheets, 5 and 9, each having the stripes 7 applied to one of their surfaces, are situated on either side of a sheet of monolithic thermoplastic sheet stock 11. With the striped faces of the composite sheet facing one another, the two sheets are aligned so that the centerline of the stripes 7 on one sheet 5 or 9 are aligned with the centerline of the spaces between the stripes 7 on the other sheet 9 or 5, respectively. The width of the striped portion on one sheet 5 or 9 is greater than the width of the spaces between the stripes on the other sheet 9 or 5 with which it is aligned. Each sheet 5 and 9 does not have to have all the stripes with equal width nor do the spaces between the stripes have to have the same width. The two sheets do not have to have the same width stripes or spaces. The monolithic core plastic sheet 11 can be of the same type of thermoplastic as used in the outer sheets 5 and 9, which are preferably glass reinforced. Thermoplastics which can be used are polycarbonate, polybutylene terephthalate, and a blend of bisphenol A polycarbonate and polybutylene terephthalate, available from the General Electric Company as Lexan, Valox and Xenoy, respectively, all registered trademarks of the General Electric Company. The materials chosen are selected so that during heating the stack of sheets of the core sheet becomes plastically deformable at a temperature equal to or below that of the outside sheets. When the core and outer sheets contain the same type of plastic resin and the outer sheets are glass reinforced composites, the composite sheets will advantageously have a higher range of working temperatures than the monolithic sheet.

The three sheets shown in Figure 2 are heated to an elevated temperature, such as by radio frequency heating, and bonded by applying a low pressure to the stack of sheets. The core sheet is raised to or above its glass transition temperature. The bonding that takes place between the layers when the sheets are pressed together is periodic, with regions containing very good bonds adjacent to regions that are poorly bonded or not bonded at all, dependent on locations of the stripes.

The bonded stack of plastic sheets can either be formed immediately after the bonding has been done and while the central core sheet is still hot or the layers can be allowed to cool and the sheet reheated and processed at a later time. In either case, the final structure having a corrugated core is formed by applying a force normal to the outer sheets such as by using negative air pressure or by an array of suction cups of the type used for handling plate glass. The final expanded structural panel is shown in Figures 3 and 4. The plastic core remains bonded to the upper and lower surface sheets only in those locations which do not contain the "no-stick" stripes. The portion of the monolithic core sheet which has stripes above and beneath deforms plastically when the sheets are pulled apart a predetermined distance. The panel has a high cross-sectional moment of inertia and thus is very stiff in terms of bending.

If desired, the bonded structure shown in Figure 2 can be shaped by roller forming or stamping, for example, to provide a desired contour prior to expansion. The stripes 7 can alternatively be applied to either side of the monolithic core piece 11 rather than the outside sheets 5 and 9, with the centerline of the stripes on one side of the core piece 11 in the line with the centerline of the spaces between the stripes on the other side of the core piece, with the stripes being wider than the spaces with which they are aligned. The structure would appear as shown in Figure 2 prior to expansion and would appear as shown in Figures 3 and 4 after to expansion.

The foregoing has described a simple method of fabricating expanded structural panels which are stiff in bending and also lightweight.

## Claims

1. A method of fabricating an expanded structural panel comprising the steps of:

   coating one side of a first (5) and second (9) plastic sheet with stripes (7) of material to which hot thermoplastic (i.e. thermoplastic heated to or above its glass transition temperature) adheres poorly, the stripes being spaced apart from one another;

   positioning the two sheets with the sides having stripes facing one another and above and beneath a third sheet (11) comprising thermoplastic material, the centerline of the spaces between the stripes on one sheet being aligned opposite the centerline of the stripes on the other sheet, the stripes being wider than the opposing spaces;

   compressing the sheets together;

   heating the third sheet so that it adheres to the first and second sheets where the coating is not present and so that it allows plastic deformation of the third sheet; and

   separating the first and second sheets causing the portions of the third sheet situated above and beneath stripes to separate from the first and second sheet and elongate to form a corrugated core.

2. The method of claim 1 wherein said first and second sheets comprise thermoplastic material.

3. The method of claim 1 wherein said third sheet comprises a monolithic thermoplastic sheet.

4. The method of claim 2 wherein said first and second sheets comprise glass fiber reinforced thermoplastic material.

5. The method of claim 1 wherein the stripes are applied parallel to one another.

6. The method of claim 5 wherein said stripes are wider than the spaces between the stripes on the same sheet and the width and spacing of the stripes on the first and second sheet are the same.

7. An expanded structural panel prepared according to the method of claim 1.

8. An unexpanded structural panel comprising:

   a first (5) and second (9) outer plastic sheet;

   material to which hot thermoplastic (i.e. thermoplastic heated to or above its glass transition temperature) adheres poorly, applied in stripes (7) to one surface of each of said outer sheets, said stripes being spaced apart; and

   a core sheet (11) of thermoplastic material having said outer sheets situated above and beneath said core sheet, the surfaces of said outer sheets having their stripes facing one another with the centerline of the spaces on one sheet situated opposite the centerline of the striped portions on the other sheet, the striped portions being wider than the opposing spaces between the stripes, said core sheet being periodically bonded to said first and second outer sheets where said material to which hot plastic adheres poorly is not present.

9. A method of fabricating an expanded structural panel comprising the steps of:

   coating both sides of a first sheet (11) of thermoplastic material with stripes (7) of material to which hot thermoplastic (i.e. thermoplastic heated to or above its glass transition temperature) adheres poorly, the stripes being spaced apart from one another with the centerline of the spaces between the stripes on one side of the sheet, being aligned with the centerline of the stripes on the other side of the sheet, the stripes being wider than the spaces on the other side with which they are aligned;

   positioning a second (5) and third (9) plastic sheet on either side of the first sheet;

   compressing the sheets together;

   heating the first sheet so that it adheres to the second and third sheets where the coating is not present and so that it allows plastic deformation of the first sheet; and

   separating the second and third sheets causing portions of the first sheet situated between opposing stripes on opposite sides of the sheet, to elongate and form a corrugated core.

10. The method of claim 9 wherein said second and third sheets comprise thermoplastic material.

11. The method of claim 9 wherein said first sheet comprises a monolithic thermoplastic material.

12. The method of claim 10 wherein said second and third sheets comprise glass fiber reinforced thermoplastic material.

13. The method of claim 9 wherein the stripes are applied parallel to one another.

14. The method of claim 9 wherein said stripes are wider than the spaces between the stripes on the same side of the sheet, and the width and spacing of the stripes on one side of the first sheet are the same as on the second side of the first sheet.

15. An expanded structural panel prepared according to the method of claim 9.

16. An unexpanded structural panel comprising:

   a first (5) and second (9) outer plastic sheet;

   a core sheet (11) of thermoplastic material, and

   material to which hot thermoplastic (i.e. thermoplastic heated to or above its glass transition temperature) adheres poorly, applied in stripes (7) to both sides of said core sheet, the stripes being spaced apart from another, the centerline of the spaces on one side of the sheet being aligned with the centerline of the stripes on the other side of the core sheet, the striped portions on one side of the sheet being wider than the spaces with which they are aligned on the opposite side of the sheet, said first and second outer sheets being periodically bonded on either side of said core sheet where said material to which hot plastic adheres poorly is not present.

## Revendications

1. Procédé de fabrication d'un panneau structurel expansé, comprenant les étapes consistant à :

   revêtir un côté d'une première (5) et d'une seconde (9) feuille plastique avec des bandes (7) de matériau auquel adhère faiblement un thermoplastique chaud (c'est-à-dire un thermoplastique chauffé à sa température de transition vitreuse ou au-dessus de cette température), les bandes étant espacées les unes des autres ;

   positionner les deux feuilles avec les côtés ayant des bandes en regard l'une de l'autre et au-dessus et au-dessous d'une troisième feuille (11) comprenant un matériau thermoplastique, l'axe des espaces séparant les bandes d'une feuille étant aligné à l'opposé de l'axe des bandes de l'autre feuille, les bandes étant plus larges que les espaces opposés ;

comprimer les feuilles ensemble ;

chauffer la troisième feuille de façon qu'elle adhère aux première et seconde feuilles là où le revêtement n'est pas présent et de façon à permettre la déformation plastique de la troisième feuille ; et

séparer les première et seconde feuilles, ce qui a pour effet que les parties de la troisième feuille situées au-dessus et au-dessous des bandes se séparent des première et seconde feuilles et s'allongent pour former une âme ondulée.

2. Procédé selon la revendication 1, dans lequel lesdites première et seconde feuilles sont constituées d'un matériau thermoplastique.

3. Procédé selon la revendication 1, dans lequel ladite troisième feuille comprend une feuille thermoplastique monolithique.

4. Procédé selon la revendication 2, dans lequel lesdites première et seconde feuilles comprennent un matériau thermoplastique armé de fibres de verre.

5. Procédé selon la revendication 1, dans lequel les bandes sont appliquées parallèlement les unes aux autres.

6. Procédé selon la revendication 5, dans lequel lesdites bandes sont plus larges que les espaces séparant les bandes sur la même feuille et la largeur et l'espacement d'une bande sur les première et seconde feuilles sont identiques.

7. Panneau structurel expansé préparé selon le procédé de la revendication 1.

8. Panneau structurel non-expansé comprenant :

une première (5) et une seconde (9) feuille plastique extérieure;

un matériau auquel adhère faiblement le thermoplastique chaud (c'est-à-dire le thermoplastique chauffé à sa température de transition vitreuse ou au-dessus de cette température), appliqué en bandes (7) à une surface de chacune desdites feuilles extérieures, les bandes étant espacées les unes des autres, et

une feuille d'âme (11) en matériau thermoplastique ayant lesdites feuilles extérieures placées au-dessus et au-dessous de ladite feuille de l'âme, les surfaces des feuilles extérieures ayant leurs bandes en regard les unes des autres, l'axe des espaces sur une feuille étant opposé à l'axe des parties rayées de l'autre feuille, les parties rayées étant plus larges que les espaces opposés entre les bandes, ladite feuille de l'âme étant liée périodiquement auxdites première et seconde feuilles extérieures là où n'est pas présent le matériau auquel le plastique chaud adhère faiblement.

9. Procédé de fabrication d'un panneau structurel expansé, comprenant les étapes consistant à :

revêtir les deux côtés d'une première feuille (11) de matériau thermoplastique avec des bandes (7) de matériau auquel adhère faiblement un thermoplastique chaud (c'est-a-dire un thermoplastique chauffé à sa température de transition vitreuse ou au-dessus de cette température), les bandes étant espacées les unes des autres avec l'axe des espaces séparant les bandes sur un côté de la feuille en alignement avec l'axe des bandes sur l'autre côté de la feuille, les bandes étant plus larges que les espaces sur l'autre côté avec lesquels elles sont en alignement,

positionner une seconde (5) et une troisième (9) feuille plastique sur l'un ou l'autre côté de la première feuille ;

comprimer les feuilles ensemble ;

chauffer la première feuille de façon qu'elle adhère aux seconde et troisième feuilles là où le revêtement n'est pas présent et de façon à permettre la déformation plastique de la première feuille ; et

séparer les seconde et troisième feuilles, ce qui a pour effet que des parties de la première feuille situées entre les bandes opposées sur les côtés opposés de la feuille s'allongent et forment une âme ondulée.

10. Procédé selon la revendication 9, dans lequel lesdites seconde et troisième feuilles comprennent un matériau thermoplastique.

11. Procédé selon la revendication 9, dans lequel ladite première feuille comprend un matériau thermoplastique monolithique.

12. Procédé selon la revendication 10, dans lequel les seconde et troisième feuilles comprennent un matériau thermoplastique armé de fibres de verre.

13. Procédé selon la revendication 9, dans lequel les bandes sont appliquées parallèlement les unes aux autres.

**14.** Procédé selon la revendication 9, dans lequel lesdites bandes sont plus larges que les espaces séparant les bandes sur le même côté de la feuille, et la largeur et l'espacement des bandes sur un côté de la première feuille sont les mêmes que sur le second côté de la première feuille.

**15.** Panneau structurel expansé, préparé selon le procédé de la revendication 9.

**16.** Panneau structurel expansé comprenant :

une première (5) et une seconde (9) feuille plastique extérieure ;

une feuille d'âme (11) en matériau thermoplastique, et

un matériau auquel adhère faiblement un thermoplastique chaud (c'est-à-dire un thermoplastique chauffé à sa température de transition vitreuse ou au-dessus de cette température), appliqué en bandes (7) aux deux côtés de la feuille de l'âme, les bandes étant espacées les unes des autres, l'axe des espaces sur un côté de la feuille étant en alignement avec l'axe des bandes sur l'autre côté de la feuille de l'âme, les parties rayées sur un coté de la feuille étant plus large que les espaces avec lesquels elles sont en alignement sur le côté opposé de la feuille, lesdites première et seconde feuilles extérieures étant liées périodiquement sur chaque côté de ladite feuille de l'âme là où n'est pas présent le matériau auquel adhère faiblement le plastique chaud.

**Patentansprüche**

**1.** Verfahren zum Herstellen einer expandierten Bauplatte umfassend die Stufen:
Überziehen einer Seite einer ersten (5) und zweiten (9) Kunststoffplatte mit Streifen (7) aus Material, an dem heißer Thermoplast (d. h. Thermoplast, der bis zu seiner Glasübergangstemperatur oder darüber erhitzt worden ist) schlecht haftet, wobei die Streifen einen Abstand voneinander haben;
Anordnen der beiden Platten mit den Streifen aufweisenden Seiten, so daß diese einander gegenüberstehen sowie darüber und darunter eine dritte Platte (11), die thermoplastisches Material umfaßt, wobei die Mittellinie der Räume zwischen den Streifen auf einer Platte gegenüber der Mittellinie der Streifen auf der anderen Platte ausgerichtet ist, und die Streifen breiter sind als die gegenüberliegenden Räume;
Zusammenpressen der Platten;
Erhitzen der dritten Platte, so daß sie dort, wo der Überzug nicht vorhanden ist, an der ersten und zweiten Platte haftet und es eine plastische Verformung der dritten Platte gestattet und
Trennen der ersten und der zweiten Platte unter Trennung der Teile der dritten Platte, die oberhalb und unterhalb der Streifen angeordnet sind, von der ersten und zweiten Platte und Dehnen dieser Teile zur Bildung eines gewellten Kernes.

**2.** Verfahren nach Anspruch 1, worin die erste und zweite Platte thermoplastisches Material umfassen.

**3.** Verfahren nach Anspruch 1, worin die dritte Platte eine monolithische thermoplastische Platte umfaßt.

**4.** Verfahren nach Anspruch 2, worin die erste und zweite Platte glasfaserverstärktes und thermoplastisches Material umfassen.

**5.** Verfahren nach Anspruch 1, worin die Streifen parallel zueinander aufgebracht sind.

**6.** Verfahren nach Anspruch 5, worin die Streifen breiter als die Räume zwischen den Streifen auf der gleichen Platte sind und Breite und Abstand der Streifen auf der ersten und zweiten Platte gleich sind.

**7.** Expandierte Bauplatte hergestellt nach dem Verfahren gemäß Anspruch 1.

**8.** Nicht expandierte Bauplatte umfassend:
eine erste (5) und zweite (9) äußere Kunststoffplatte;
Material, an dem heißer Thermoplast (d. h. Thermoplast, der bis zu seiner Glasübergangstemperatur oder darüber erhitzt worden ist) schlecht haftet, das in Streifen (7) auf eine Oberfläche jeder der äußeren Platten aufgebracht ist, wobei die Streifen einen Abstand voneinander haben und
eine Kernplatte (11) aus dem thermoplastischen Material über und unter der die genannten äußeren Platten angeordnet sind, wobei die Oberflächen der äußeren Platten, die die Streifen aufweisen, einander gegenüberliegen und die Mittellinie der Räume auf einer Platte gegenüber der Mittellinie der streifenförmigen Abschnitte auf der anderen Platte angeordnet ist und die streifenförmigen Abschnitte breiter sind als die gegenüberliegenden Räume zwischen den Streifen und die Kernplatte periodisch an die erste und zweite äußere Platte gebunden ist, wo das Material, an dem der heiße Kunststoff schlecht haftet, nicht vorhanden ist.

9. Verfahren zum Herstellen einer expandierten Bauplatte umfassend die Stufen:
Überziehen beider Seiten einer ersten Platte (11) aus thermoplastischem Material mit Streifen (7) aus Material, an dem heißer Thermoplast (d. h. Thermoplast, der bis zu seiner Glasübergangstemperatur oder darüber erhitzt worden ist) schlecht haftet, wobei die Streifen einen Abstand voneinander haben und die Mittellinie der Räume zwischen den Streifen auf einer Seite der Platte mit der Mittellinie der Streifen auf der anderen Seite der Platte ausgerichtet ist und die Streifen breiter sind als die Räume auf der anderen Seite, mit denen sie ausgerichtet sind;
Anordnen einer zweiten (5) und einer dritten (9) Kunststoffplatte auf jeder Seite der ersten Platte,
Zusammenpressen der Platten;
Erhitzen der ersten Platte, so daß sie dort an der zweiten und dritten Platte haftet, wo der Überzug nicht vorhanden ist und es die plastische Verformung der ersten Platte gestattet,
Trennen der zweiten und dritten Platte, wodurch sich Abschnitte der ersten Platte, die zwischen gegenüberliegenden Streifen auf gegenüberliegenden Seiten der Platte angeordnet sind dehnen und einen gewellten Kern bilden.

10. Verfahren nach Anspruch 9, worin die zweite und dritte Platte thermoplastisches Material umfassen.

11. Verfahren nach Anspruch 9, worin die erste Platte ein monolithisches thermoplastisches Material umfaßt.

12. Verfahren nach Anspruch 10, worin die zweite und dritte Platte glasfaserverstärktes thermoplastisches Material umfassen.

13. Verfahren nach Anspruch 9, worin die Streifen parallel zueinander aufgebracht werden.

14. Verfahren nach Anspruch 9, worin die Streifen breiter sind als die Räume zwischen den Streifen auf der gleichen Seite der Platte und die Breite und der Abstand der Streifen auf der einen Seite der ersten Platte die gleichen sind wie auf der zweiten Seite der ersten Platte.

15. Expandierte Bauplatte hergestellt nach dem Verfahren gemäß Anspruch 9.

16. Nicht expandierte Bauplatte umfassend:
eine erste (5) und zweite (9) äußere Kunststoffplatte;
eine Kernplatte (11) aus thermoplastischem Material und Material, an dem heißer Thermoplast (d. h. Thermoplast, der bis zu seiner Glasübergangstemperatur oder darüber erhitzt worden ist), schlecht haftet, das in Streifen (7) auf beiden Seiten der Kernplatte aufgebracht ist, wobei die Streifen einen Abstand voneinander haben, die Mittellinie der Räume auf einer Seite der Platte mit der Mittellinie der Streifen auf der anderen Seite der Kernplatte ausgerichtet ist, die streifenförmigen Abschnitte auf einer Seite der Platte breiter sind als die Räume, mit denen sie auf der gegenüberliegenden Seite der Platte ausgerichtet sind und die erste und zweite äußere Platte periodisch auf jeder Seite der Kernplatte gebunden sind, wo das Material, an dem heißer Kunststoff schlecht haftet, nicht vorhanden ist.

RD-1798

H.F. NIED

1    1  SIPLE

10056  x  058712

*Fig. 1*

*Fig. 2*

*Fig. 3*

*Fig. 4*